# EUROPÄISCHE PATENTANMELDUNG

(11) **EP 1 764 487 A1**
(43) Veröffentlichungstag der Anmeldung: **21.03.2007**
(21) Anmeldenummer: 05019969.4
(22) Anmeldetag: 19.09.2005
(51) Int. Cl.: F01K 25/08, C09K 5/04

(54) **Arbeitsfluid für einen ORC-Prozess**

(71) Anmelder: Solvay Fluor GmbH, 30173 Hannover (DE)
(72) Erfinder: Martin Schweigel, 50733 Köln (DE); Felix Flohr, 31134 Hädesheim (DE); Christoph Meurer, 30161 Hannover (DE)
(74) Vertreter: Kulik, Angelika

(57) **Zusammenfassung**

Die Erfindung betrifft Arbeitsfluide zur Energieumwandlung in einem thermischen ORC-Kreisprozess zur kombinierten Erzeugung von Elektro- und Wärmeenergie. Als Wärmequelle wird insbesondere Thermalwasser verwendet.

Als Arbeitsfluide werden teil- oder perfluorierte Kohlenwasserstoffe und/oder teil- oder perfluorierte Polyether und/oder teil- oder perfluariarta Ketone eingesetzt.

In einer Ausführungsform der Erfindung wird eine Kombination aus 1,1,1,3,3-Pentafluorbutan und einem fluorierten Polyether mit einem Molekulargewicht von 340 und einem Siedepunkt bei 57 °C bei 101,3 kPa als Arbeitsfluid eingesetzt.

## Beschreibung

Die Erfindung betrifft Arbeitsfluide für einen ORC-Prozess zur Energieumwandlung in einem thermischen Kreisprozess zur kombinierten Erzeugung von Elektro- und Wärmeenergie.

In einem thermischen ORC-Kreisprozess können durch Auswahl der entsprechenden Arbeitsfluide Temperaturdifferenzen überbrückt und genutzt werden. Derartige Anlagen werden zur Elektroenergieerzeugung aus der Abwärme von Anlagen zur Glasherstellung, Zementöfen, Stahlöfen und anderen Prozessen mit Abwärme von einer Temperatur größer 150°C genutzt. Die Nutzung von Erdwärme, Solarwärme oder der Abwärme aus der Verbrennung von Müll, Biomasse und anderen flüssigen oder festen Brennstoffen oder ein kombiniertes Betreiben von Gasturbinen und Abwärmenutzung ist mittels eines ORC-Kreisprozesses ebenfalls möglich.

Erdwärme kann entweder direkt genutzt oder in elektrische Energie umgewandelt werden. Die Umwandlung der Erdwärme in elektrische Energie gewinnt immer mehr an Bedeutung. Üblicherweise kommen hierbei mit einem organischen Arbeitsfluid betriebene Dampfkraftprozesse (Organic Rankine Cycle, ORC) zum Einsatz. Ein solches System mit einem organischen Arbeitsfluid setzt sich aus den Hauptkomponenten Verdampfer, Turbine, Kondensator und Speisepumpe sowie den dazugehörigen Steuer- und Regeiungselementen zusammen. Das Arbeitsfluid wird so gewählt, dass seine thermodynamischen Eigenschaften an die vorhandene Wärmequelle angepasst werden. Vorzugsweise werden Arbeitsfluide eingesetzt, die bei vergleichsweise niedrigen Temperaturen verdampfen.

Die Erdwärme wird in Form von heißem Thermalwasser mit einer Temperatur von beispielsweise ca. 180 °C als Wärmequelle genutzt. Thermalwasser mit einer geringeren Temperatur ist ebenfalls als Wärmequelle nutzbar, wobei hierbei ein Arbeitsfluid mit entsprechend niedriger Verdampfungstemperatur ausgewählt werden muss.

Das Arbeitsfluid wird durch die Wärmequelle vorerwärmt, danach überhitzt und schließlich in einer Turbine entspannt und treibt dabei über eine Welle einen Generator zur Stromerzeugung an. Anschließend wird das Arbeitsfluid kondensiert und mittels der Speisepumpe wieder verdichtet und in den Vorerwärmer zurückgeführt.

Um eine wirtschaftliche Arbeitsweise zu garantieren werden an das Arbeitsfluid besondere Anforderungen gestellt, Insbesondere werden die Arbeitsfluide unter Berücksichtigung des Wärmeinhaltes der Wärmequelle ausgewählt.

Das Arbeitsfluid soll ungiftig sein und keine Ozon abbauende Wirkung haben. Ferner soll es möglichst nicht brennbar sein und auch bei hohen Temperaturen einen noch entsprechend niedrigen Druck aufweisen. Das Arbeitsfluid soll eine hohe thermische und chemische Stabilität besitzen. Da die Arbeitsfluide in geschlossenen Kreisläufen eingesetzt werden, die üblicherweise aus metallischen Komponenten bestehen, ist die Frage der Reaktivität und des Korrosionsverhalten gegenüber den eingesetzten Metallen ebenfalls ein wichtiger Aspekt bei der Auswahl der Arbeitsfluide.

Zur Begrenzung der Investitionen für die Turbinen hat sich die Verwendung von Arbeitsfluiden mit hohem Molekulargewicht als vorteilhaft erwiesen. Die nutzbare Bewegungsenergie schwerer Moleküle lässt sich aufgrund ihrer geringeren Geschwindigkeit mit einem oder nur wenigen Turbinenschaufelkränaen bei maximaler Turbinendrehzahl weitgehend abbauen. Bei leichteren und damit schnelleren Fluiden sind in der Anschaffung entweder kostspieligere größere Turbinen oder zweistufige Turbinen zur Erreichung von hohen Drehzahlen erforderlich, oder zusätzliche Getriebe einzubauen.

Als geeignete Arbeitsfluide werden beispielsweise Kohlenwasserstoffe, wie Pentan oder halogenierte Kohlenwasserstoffe, wie Trifluormethan, Tetrafluormethan, Pentafluorpropan bereits eingesetzt (EP 0 066 439, US 6 880 344). Ein wesentlicher Nachteil bei der Verwendung von reinen Kohlenwasserstoffen ist deren Explosivität.

Die Aufgabe der Erfindung besteht darin, ein Arbeitsfluid zur Energierückgewinnung, insbesondere zur Nutzung von Wärmequellen mit einer Temperatur bis ca. 180°C, bereitzustellen, welches den genannten Anforderungen gerecht wird.

Die Aufgabe wird dadurch gelöst, dass als Arbeitsfluid mindestens eine Verbindung ausgewählt aus der Gruppe der teil- oder perfluorierten Kohlenwasserstoffe, wie Tetrafluorethan, insbesondere 1,1,1,2-Tetrafluorethan, Pentafluorpropan, insbesondere 1,1,1,3,3-Pentafluorpropan, Hexafluorpropan,Heptafluorpropan, insbesondere 1,1,1,2,3,3,3-Heptafluorpropan, Pentafluorbutan, insbesondere 1,1,1,3,3-Pentafluorbutan, Hexafluorbutan, Heptafluorbutan, Decafluorpentan, Perfluorpentan, Perfluorhexan oder deren Mischungen untereinander und/oder mindestens eine Verbindung aus der Gruppe der teil- oder perfluorierten Polyether und/oder der teil- oder perfluorierten Ketone eingesetzt wird. Mischungen der genannten fluorierten Kohlenwasserstoffe mit den genannten fluorierten Polyethern oder Ketonen können ebenfalls als Arbeitsfluid für einen ORC-Prozess eingesetzt werden. Das erfindungsgemässe Arbeitsfluid wird aus der Vielzahl der geeigneten Verbindungen oder Mischungen dieser Verbindungen so ausgewählt, dass der Siedepunkt des eingesetzten Arbeitsfluides unterhalb der Temperatur der Wärmequelle liegt, so dass die Verdampfung des Arbeitsfluides ohne größeren technischen Aufwand möglich ist. Die Zusammensetzung der Mischungen wird so gewählt, dass eine azeotrope oder nahezu azeotrope Mischung gebildet wird.

Das eingesetzte Arbeitsfluid ist innerhalb des interessierenden Temperaturbereiches stabil und weist gute thermodynamische Eigenschaften auf.

Geeignete perfluorierte Polyether werden z.B. in der WO 02/38718 beschrieben. Diese perfluorierten Polyether enthalten Kohlenwasserstoff Fluor und Sauerstoff, besitzen mindestens zwei, vorzugsweise drei C-O-C-Etherbindungen und haben ein Molekulargewicht von etwa 200 oder mehr und einen Siedepunkt oberhalb 40 °C bei 101,3 kPa. Diese Polyether sind herstellungsbedingt eine Mischung von Einzelsubstanzen.

Als bevorzugte Perfluorpolyether wurden die von der Fa. Solvay Solexis unter dem Namen GALDEN und FOMBLIN vermarkteten Produkte verwendet.

### Als Beispiel sei genannt:

GALDEN HT 55 : Siedepunkt 57 °C bei 101,3 kPa; Molekulargewicht 340
GALDEN HT 70 : Siedepunkt 66 °C bei 101,3 kPa; Molekulargewicht 410
FOMBLIN PFS1: Siedepunkt 90 °C bei 101,3 kPa; Molekulargewicht 460

Als geeignete teilfluorierte Polyether können die von der Fa. 3M unter dem Namen NOVEC vermarkteten Hydrofluorether verwendet werden. Hierbei handelt es sich meistens um Mehrkomponentensysteme mit einem Siedepunkt im Bereich von 40 bis 76 °C.

In einer bevorzugten Ausführungsform der Erfindung werden als teil- oder perfluorierte Kohlenwasserstoffe insbesondere 1,1,1,3,3-Pentafluorbutan (HFC 365mfc), 1,1,1,2-Tetrafluorethan (HFC 134a), 1,1,1,3,3-Pentafluorpropan (HFC 245fa) oder deren Mischungen untereinander eingesetzt.

Als teil- oder perfluorierte Polyether werden vorzugsweise GALDEN HT 55, GALDEN HT 70 eingesetzt.

Mischungen der Polyether mit den fluorierten Kohlenwasserstoffen sind ebenfalls geeignete Arbeitsfluide im Sinne der Erfindung.

Als fluorierte Ketone werden teil- oder perfluorierte Ketone der allgemeinen Formel R - C(O) - R' eingesetzt, wobei R und R' teil- oder perfluorierte Substituenten sind, die gleich oder unterschiedlich sein können und vorzugsweise fluorierte Alkylgruppen sind.R kann jedoch auch für eine lineare oder verzweigte Alkylgruppe stehen. Die fluorierten Alkylgruppen mit vorzugsweise 1 bis 6 Kohlenstoffatomen können ebenfalls linear oder verzweigt sein, wobei maximal 2 Fluoratome durch Wasserstoff ersetzt sein können. R steht vorzugsweise für Perfluorisopropyl- und R' vorzugsweise für eine Trifluormethyl- oder Pentafluorethyl-Gruppe. In einer Ausführungsform wird als teilfluoriertes Keton eine Verbindung der obengenannten allgemeinen Formel, in der R für eine lineare oder verzweigte Alkylgruppe, vorzugsweise für eine Methyl-Gruppe steht, und R' die obengenannte Bedeutung hat, verwendet. Mischungen der Ketone mit den fluorierten Kohlenwasserstoffen sind ebenfalls geeignet. Die Herstellung dieser fluorierten Ketone wird in der EP 1 261 398 beschrieben. Die Siedepunkte der geeigneten Ketone liegen im Bereich von 0°C bis etwa 150 °C, vorzugsweise im Bereich von 0°C bis etwa 110°C, insbesondere im Bereich von 0 °C bis etwa 75 °C.

In einer bevorzugten Ausführungsform werden fluorierte Ketone aus der Gruppe CF3C(O)CF(CF3)2, CF3CF2C(O)CF(CF3)2, CH3C(O)CF2CF2H, CH3C(O)CF2CFHCF3 verwendet. In einer weiteren bevorzugten Ausführungsform werden die Ketone in Kombination mit teil- oder perfluorierten Kohlenwasserstoffen als Arbeitsfluid eingesetzt. Insbesondere werden Mischungen, die HFC 365mfc und mindestens eine Verbindung der genannten Ketone, vorzugsweise CF3C(O)CF(CF3)2, enthalten oder daraus bestehen, eingesetzt.

In einer weiteren bevorzugten Ausführungsfom wird als Arbeitsfluid eine Mischung aus HFC 365mfc und GALDEN HT 55 im Mischungsverhältnis von 65 zu 35 % eingesetzt,

Mischungen aus HFC 365mfc und Hydrofluorether oder HFC 365mfc und Perfluorhexan oder HFC 365mfc und Perfluorpentan oder HFC 365mfc und Decafluorpentan sind ebenfalls bevorzugte Arbeitsfluide, insbesondere zur Energieumwandlung unter Verwendung von Geothermalwasser als Wärmequelle. Das Mischungsverhältnis kann unterschiedlich sein und beispielsweise 50/50, 40/60 oder 65/35 betragen. Vorteilhafterweise ist das Mischungsverhältnis so zu wählen, daß eine azeotrope oder nahezu azeotrope Mischung gebildet wird.

Die erfindungsgemäßen Arbeitsfluide können zur Energieumwandlung ausgehend von Wärmequellen mit einer Temperatur von etwa 50 bis 180 °C eingesetzt werden. Sie sind besonders geeignet für die Umwandlung von Erdwärme, in Form von Thermalwasser, in elektrische Energie. Die Energieumwandlung unter Nutzung anderer Wärmequellen, wie Solarwärme oder Abwärme aus der Müllverbrennung, Biomasse oder anderen flüssigen oder festen Brennstoffen, ist ebenfalls denkbar.

Durch Kombination von mehreren Verfahrenstufen, z.B. in Form von Sekundärkreisläufen kann man den Wirkungsgrad der Anlagen erhöhen. Die in den einzelnen Sekundärkreisläufen verwendeten Arbeitsfluide können gleich oder unterschiedlich sein. Hierbei wird die Abwärme der einzelnen Sekundärkreisläufe des Kreisprozesses jeweils dem nächsten Prozess, bzw. der nächsten Stufe zugeführt. Bei Verwendung von unterschiedlichen Arbeitsfluiden können die Arbeitsfluide so gewählt werden, dass sie unterschiedliche Dampfdrücke in Abhängigkeit von der Temperatur besitzen, wobei die Dampfdrücke jeweils im optimalen Bereich liegen sollten. Durch so eine Hintereinanderschaltung der Sekundärkreisläufe ergibt sich die Möglichkeit, nach jeder Stufe Wärmeenergie, z.B zu Heizzwecken auszukoppeln.

In einer Ausführungsform wird das Thermalwasser mit einer Tiefenpumpe in die Anlage gefördert. Hier gibt es in einem Vorerwärmer und einem Verdampfer die Wärme an das Arbeitsfluid ab. Das Arbeitsfluid zirkuliert in einem sogenannten Sekundärkreislauf, wo es nach der Druckerhöhung durch die Speisepumpe den Vorerwärmer und den Verdampfer durchläuft. Der überhitzte Dampf wird in der Turbine entspannt und treibt dabei über eine Welle einen Generator zur Stromerzeugung an. Die Entspannung verläuft nicht über der Taulinie, sondern bleibt stets außerhalb des Nassdampfbereiches. Das entspannte Fluid ist also immer noch überhitzt und diese Hitze muss abgeführt werden, bevor das Arbeitsfluid kondensiert und es wieder dem Vorerwärmer zugeführt werden kann.

Die Erfindung soll nachstehend an einem Ausführungsbefspiel erläutert werden.

### Beispiel 1:

Der ORC-Kreisprozess geht von einer externen Wärmezufuhr über einen Vorwärmer und einen Verdampfer aus.

Als Wärmequelle wurde Geothermalwasser mit einer Temperatur von 100 °C verwendet. Im Verdampfer verdampft das Fluid, eine Mischung aus HFC 365mfc und GALDEN HT 55 (Mischungsverhältnis 65/35 %). Der Fluiddampf gelangt auf eine Turbine, die einen Generator zur Elektrizitätserzeugung antreibt. Ausgangsseitig wurde das Fluid in einen Kondensator geführt und das hier kondensierte Fluid wieder in den Vorerwärmer zurückgeführt.

## Patentansprüche

1. Arbeitsfluid für einen ORC-Kreisprozeß **dadurch gekennzeichnet, daß** es mindestens eine Verbindung aus der Gruppe der teil- oder perfluorierten Kohlenwasserstoffe und/oder mindestens eine Verbindung aus der Gruppe der teil- oder perfluorierten Polyether und/oder mindestens eine Verbindung aus der Gruppe der teil- oder perfluorierten Ketone oder eine Mischung dieser Verbindungen untereinander enthält oder daraus besteht.

2. Arbeitsfluid für einen ORC-Kreisprozeß nach Anspruch 1, **dadurch gekennzeichnet, daß** als teil- oder perfluorierte Kohlenwasserstoffe mindestens eine Verbindung aus der Gruppe Tetrafluorethan, insbesondere 1,1,1,3- Tetrafluorethan, Pentafluorpropan, insbesondere 1,1,1,3,3-Pentafluorpropan, Hexafluorpropan, Heptafluorpropan, insbesondere 1,1,1,2,3,3,3-Heptafluorpropan, Pentafluorbutan, insbesondere 1,1,1,3,3-Pentafluorbutan, Hexafluorbutan, Heptafluorbutan, Decafluorpentan, Perfluorpentan, Perfluorhexan oder deren Mischungen enthalten sind.

3. Arbeitsfluid nach Anspruch 1, **dadurch gekennzeichnet, daß** teil- oder perfluorierte Polyether mit einem Siedepunkt oberhalb 40 °C bei 101,3 kPa verwendet werden.

4. Arbeitsfluid nach Anspruch 1, **dadurch gekennzeichnet, dass** teil- oder perfluorierte Ketone der allgemeinen Formel R - C(O) -R', worin R eine Alkyl-, vorzugsweise Methyl- oder eine lineare oder verzweigte fluorierte C1-C6-Alkylgruppe ist, in der maximal 2 Fluoratome durch Wasserstoff ersetzt sein können und R' eine lineare oder verzweigte fluorierte C1-C6 Alkylgruppe ist, in der maximal 2 Fluoratome durch Wasserstoff ersetzt sein können, verwendet werden.

5. Arbeitsfluid nach Anspruch 1 und 4, **dadurch gekennzeichnet, dass** fluorierte Ketone aus der Gruppe CF3C(O)CF(CF3)2, CF3CF2C(O)CF(CF3)2, CH3C(O)CF2CF2H, CH3C(O)CF2CFHCF3 verwendet werden.

6. Arbeitsfluid nach Anspruch 1, **gekennzeichnet durch** eine Mischung aus 1,1,1,3,3-Pentafluorbutan und einem perfluorierten Polyether mit einem Siedepunkt von 57 °C bei 101,3 kPa.

7. Arbeitsfluid nach Anspruch 1, **gekennzeichnet durch** eine Mischung aus 1,1,1,3,3-Pentafluorbutan und CF3C(O)CF(CF3)2.
